# EUROPÄISCHE PATENTSCHRIFT

(11) **EP 3 419 847 B1**
(45) Veröffentlichungstag und Bekanntmachung des Hinweises auf die Patenterteilung: **22.01.2020**
(21) Anmeldenummer: 17706148.8
(22) Anmeldetag: 06.02.2017
(51) Int. Cl.: B60K 6/48, B60K 6/30, B60K 6/387, B60K 6/547, B60W 10/02, B60W 10/06, B60W 10/08, B60W 20/40, F16F 15/14

(54) **ANTRIEBSSYSTEM FÜR EIN HYBRIDFAHRZEUG SOWIE VERFAHREN ZUM BETREIBEN EINES SOLCHEN ANTRIEBSSYSTEMS**
DRIVE SYSTEM FOR A HYBRID VEHICLE AND METHOD FOR OPERATING SUCH A DRIVE SYSTEM
SYSTÈME DE PROPULSION POUR VÉHICULE HYBRIDE ET PROCÉDÉ POUR FAIRE FONCTIONNER UN TEL SYSTÈME DE PROPULSION

(30) Priorität: 24.02.2016 DE 102016202828
(43) Veröffentlichungstag der Anmeldung: 02.01.2019
(73) Patentinhaber: Bayerische Motoren Werke Aktiengesellschaft, 80809 München (DE)
(72) Erfinder: ROGGE, Simon, 82205 Gilching (DE); HUBER, Jochem, 80935 München (DE); HÖSS, Bernhard, 80995 München (DE); KOBLER, Sebastian, 80801 München (DE)
(74) Vertreter: Prinz & Partner mbB
(86) Internationale Anmeldenummer: PCT/EP2017/000164
(87) Internationale Veröffentlichungsnummer: WO 2017/144156

(56) Entgegenhaltungen:
- WO-A2-2015/172784
- DE-A1- 3 022 373
- DE-A1- 19 917 665
- DE-A1-102004 023 673
- DE-A1-102009 024 530
- DE-A1-102015 113 125
- WITTMER C ET AL: "OPTIMIERTE FAHRSTRATEGIEN EINES HYBRIDFAHRZEUGS MIT SCHWERER SCHWUNG-MASSE-DER TAKTBETRIEB ALS BEISPIEL", AUTOMATISIERUNGSTECHNIK - AT, OLDENBOURG WISSENSCHAFTSVERLAG, MUNCHEN, DE, Bd. 44, Nr. 7, 1. Juli 1996 (1996-07-01), Seiten 331-337, XP000592693, ISSN: 0178-2312

## Beschreibung

Die Erfindung betrifft ein Antriebssystem für ein Hybridfahrzeug sowie ein Verfahren zum Betreiben eines solchen Antriebssystems.

Um Hybridfahrzeuge energieeffizient zu betreiben, sind aus dem Stand der Technik bereits Antriebssysteme bekannt, die bei unbetätigtem Fahrpedal, also wenn keine aktive Fahrzeugbeschleunigung gewünscht ist, den Kraftschluss im Antriebsstrang bei befeuertem Verbrennungsmotor aufheben, um in einen Betriebszustand des sogenannten "Leerlaufsegelns" zu gelangen. Außerdem ist bereits bekannt, den Verbrennungsmotor bei unbetätigtem Fahrpedal und vorhandenem Kraftschluss im Antriebsstrang auszuschalten, sodass sich ein mechanischer Schleppbetrieb mit optionaler Bremsrekuperation einstellt.

Die DE 199 17 665 A1 offenbart einen Hybridantrieb für ein Kraftfahrzeug mit einem Antriebsstrang, welcher zwischen einem Verbrennungsmotor und einem Fahrzeuggetriebe mit veränderbarer Übersetzung eine erste elektrische Maschine und eine mit einer Getriebeeingangswelle permanent verbundene zweite elektrische Maschine aufweist, wobei zwischen den elektrischen Maschinen, welche jeweils als Motor und als Generator betreibbar sind, und dem Verbrennungsmotor jeweils eine schaltbare Kupplung angeordnet ist.

Die DE 29 43 554 A1 offenbart einen Hybrid-Antrieb für ein Fahrzeug, mit einem Verbrennungsmotor, einer Elektromaschine, einem Übersetzungsgetriebe sowie zwei Trennkupplungen, wobei der Verbrennungsmotor während der Fahrt in geeigneten Betriebsphasen über das Öffnen und Schließen der Trennkupplungen periodisch ab- und wieder zugeschaltet werden kann. Der Verbrennungsmotor ist in dieser Druckschrift ohne Schwungrad ausgebildet. Die erforderliche Schwungmasse ist hier der Elektromaschine zugeordnet, insbesondere zumindest teilweise in den rotierenden Teil der Elektromaschine integriert. Durch die schwungradlose Ausbildung des Verbrennungsmotors bleibt dieser nahezu unverzögert stehen, wenn die Trennkupplung zwischen dem Verbrennungsmotor und der Elektromaschine außer Eingriff gebracht wird, und kann danach durch Wiederankuppeln an die rotierende Elektromaschine aufgrund seiner geringen Masse wieder im Wesentlichen ruckfrei angeworfen werden. Auf diese Weise ist es möglich, zunächst ausschließlich mit der Elektromaschine anzufahren und den Verbrennungsmotor erst nach Erreichen einer Mindestdrehzahl unter Einsatz der in den rotierenden Massen gespeicherten kinetischen Energie anzuwerfen und sehr schnell auf die Drehzahl der Elektromaschine zu beschleunigen.

Ausgehend von einem Fahrbetrieb des Hybrid-Fahrzeugs mit abgestelltem Verbrennungsmotor hat sich jedoch herausgestellt, dass es bei einem Beschleunigungswunsch des Fahrers recht lange dauert, bis eine Fahrzeugreaktion eintritt. Dieses träge Verhalten des Antriebssystems wirkt sich nachteilig auf den Fahrkomfort aus und kann vom Fahrer als störend empfunden werden.

Daher ist es Aufgabe der Erfindung, ein Antriebssystem für ein Hybridfahrzeug sowie ein Verfahren zu dessen Betrieb bereitzustellen, das auch bei abgestelltem Verbrennungsmotor auf einen Beschleunigungswunsch des Fahrers hin eine besonders rasche Fahrzeugreaktion ermöglicht.

Diese Aufgabe wird erfindungsgemäß gelöst durch ein Antriebssystem für ein Hybridfahrzeug, mit einem Verbrennungsmotor, der eine Verbrennungsmotorwelle aufweist und antreiben kann, einem Automatikgetriebe, das antriebsseitig eine koaxial zur Verbrennungsmotorwelle angeordnete Getriebe-Eingangswelle und abtriebsseitig eine koaxial zur Verbrennungsmotorwelle angeordnete Getriebe-Ausgangswelle aufweist, einer Getriebekupplung zum Koppeln oder Entkoppeln der Getriebe-Eingangswelle und der Getriebe-Ausgangswelle, einer Schwungmassen-Antriebseinheit, die axial zwischen dem Verbrennungsmotor und dem Automatikgetriebe angeordnet ist sowie eine koaxial zur Verbrennungsmotorwelle angeordnete Zwischenwelle aufweist, einer ersten Kupplung zum Koppeln oder Entkoppeln der Verbrennungsmotorwelle und der Zwischenwelle, einer zweiten Kupplung zum Koppeln oder Entkoppeln der Zwischenwelle und der Getriebe-Eingangswelle sowie einer Elektromaschine, die auf der Getriebe-Eingangswelle sitzt und diese in einem Motorbetrieb antreiben kann. Erfindungsgemäß ist die Schwungmassen-Antriebseinheit als Zweimassenschwungrad ausgeführt und ist die Elektromaschine eine Niedervolt-Elektromaschine mit einer Betriebsspannung von weniger als 60 V. Diese Konstruktion des Antriebssystems erlaubt auch bei abgestelltem Verbrennungsmotor eine sehr rasche Fahrzeugreaktion im Falle einer vom Fahrer gewünschten Fahrzeugbeschleunigung. Bei einer Betätigung des Fahrpedals zur aktiven Beschleunigung des Fahrzeugs lässt sich die Elektromaschine nämlich sofort in den Motorbetrieb schalten und mit dem Automatikgetriebe koppeln, um das Fahrzeug im Rahmen der Leistungsfähigkeit der Elektromaschine zu beschleunigen. Gleichzeitig lässt sich über die Schwungmassen-Antriebseinheit ein mechanischer Schleppstart des abgeschalteten Verbrennungsmotors realisieren. Die Zeitspanne, bis der Verbrennungsmotor zugestartet ist und eine gewünschte Beschleunigung des Hybridfahrzeugs übernehmen kann, wird folglich von der Elektromaschine durch eine elektrische Fahrzeugbeschleunigung überbrückt. Das Antriebssystem reagiert damit weniger träge und vermittelt dem Fahrer eine gewünschte, rasche Fahrzeugreaktion.

Erfindungsgemäß ist die Elektromaschine eine Niedervolt-Elektromaschine mit einer Betriebsspannung von weniger als 60 V. Durch die Ausbildung als Niedervolt-Elektromaschine lassen sich die Kosten des Antriebssystems reduzieren. Dies liegt vor allem daran, dass aufgrund der niedrigeren elektrischen Spannung im System das Gefährdungsrisiko geringer und die Absicherung des elektrischen Bordnetzes somit einfacher und kostengünstiger bereitzustellen ist. Insbesondere ist die verwendete Elektromaschine eine 48-V-Elektromaschine, da diese im Vergleich zu einer herkömmlichen 12-V-Elektromaschine sowohl im Generatorbetrieb bei der Rekuperation als auch im Motorbetrieb eine höhere Leistung bereitstellen kann. Insbesondere bei der Verwendung der Elektromaschine zum Beschleunigen des Hybridfahrzeugs macht sich eine höhere Leistung der Elektromaschine positiv bemerkbar, da die Fahrzeugreaktion für den Fahrer deutlicher wahrnehmbar ist.

Vorzugsweise ist die Elektromaschine in das Automatikgetriebe des Hybridfahrzeugs integriert.

Insbesondere kann das Automatikgetriebe antriebsseitig eine Kupplungsglocke aufweisen, wobei die Elektromaschine in der Kupplungsglocke aufgenommen ist. Die Elektromaschine ersetzt dabei den üblicherweise in der Kupplungsglocke von Automatikgetrieben vorgesehenen Drehmomentwandler, sodass sich eine kompakt ausgeführte Elektromaschine ohne zusätzlichen Bauraumbedarf in das Automatikgetriebe integrieren lässt. Dies führt zu einer besonders kompakten Konstruktion des Antriebssystems.

In einer weiteren Ausführungsform des Antriebssystems ist ein elektrisches Bordnetz vorgesehen, wobei die Elektromaschine auch als Generator ausgebildet ist und in einem Generatorbetrieb elektrische Energie in das elektrische Bordnetz einspeist. Auf diese Weise lässt sich die Elektromaschine mit geringem Aufwand zur Rekuperation nutzen, bei welcher die kinetische Fahrzeugenergie in elektrische Energie umgesetzt wird.

Die eingangs genannte Aufgabe wird im Übrigen auch gelöst durch ein Verfahren zum Betreiben des oben beschriebenen Antriebssystems, welches eine elektrische Steuereinheit aufweist, wobei das Verfahren folgende Schritte umfasst:
a) In einem Betriebszustand des Antriebssystems wird die erste Kupplung geöffnet und der Verbrennungsmotor abgeschaltet;
b) der elektrischen Steuereinheit wird ein Signal zur aktiven Fahrzeugbeschleunigung übermittelt;
c) daraufhin wird die zweite Kupplung durch die elektrische Steuereinheit geöffnet;
d) anschließend werden die erste Kupplung und die Getriebekupplung geschlossen.

Durch dieses Verfahren wird im Falle einer gewünschten, aktiven Fahrzeugbeschleunigung bei abgelegtem, das heißt unbefeuertem und entkoppeltem Verbrennungsmotor eine Funktionstrennung durchgeführt. Die Schwungmassen-Antriebseinheit wird von der Elektromaschine entkoppelt und mit dem Verbrennungsmotor gekoppelt, um einen mechanischen Schleppstart des Verbrennungsmotors durchzuführen. Während der Verbrennungsmotor gestartet wird, ist die Elektromaschine bereits mit dem Automatikgetriebe, insbesondere der Getriebe-Ausgangswelle des Automatikgetriebes, gekoppelt, um das Hybridfahrzeug zu beschleunigen. Der Beschleunigungswunsch des Fahrers lässt sich somit in vorteilhafter Weise bereits vor dem Zustarten des Verbrennungsmotors und vor dessen Kopplung mit der Getriebe-Ausgangswelle über die Elektromaschine realisieren.

Vorzugsweise wird der Verbrennungsmotor nach dem Schließen der ersten Kupplung im Schritt d) durch die Schwungmassen-Antriebseinheit gestartet. Die Schwungmassen-Antriebseinheit bildet einen Energiespeicher und ist insbesondere so ausgeführt, dass der Verbrennungsmotor über eine rotierende Schwungmasse der Schwungmassen-Antriebseinheit gestartet werden kann. Im Fahrbetrieb des Hybridfahrzeugs wird die Schwungmasse der Schwungmassen-Antriebseinheit idealerweise stets über einer notwendigen Mindestdrehzahl zum Starten des Verbrennungsmotors gehalten.

Die Getriebe-Ausgangswelle kann nach dem Schließen der Getriebekupplung im Schritt d) durch die Elektromaschine angetrieben werden. Auf diese Weise lässt sich nach einem erfassten Beschleunigungswunsch des Fahrers mit geringem Aufwand eine entsprechende Fahrzeugreaktion, das heißt eine Fahrzeugbeschleunigung, erzeugen.

Gemäß einer Verfahrensvariante wird nach einem Start des Verbrennungsmotors im Schritt d) die zweite Kupplung in einem nachfolgenden Verfahrensschritt e) wieder geschlossen. Durch das Schließen der zweiten Kupplung wird der zugestartete Verbrennungsmotor mit dem Automatikgetriebe, insbesondere der Getriebe-Ausgangswelle des Automatikgetriebes, verbunden und kann das Hybridfahrzeug in gewünschter Weise beschleunigen.

Gemäß einer weiteren Verfahrensvariante wird die Getriebekupplung vor Schritt b) geschlossen und die Elektromaschine in einen Generatorbetrieb geschaltet. Das Fahrzeug nimmt dadurch einen besonders energiesparenden Betriebszustand ein, der auch als "Motor-aus-Segeln mit Rekuperation" bezeichnet wird. In diesem Betriebszustand wird das rollende Hybridfahrzeug bei abgelegtem Verbrennungsmotor lediglich durch Reibungseffekte sowie den im Generatorbetrieb auftretenden, einstellbaren Widerstand der Elektromaschine gebremst.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine schematische Skizze eines erfindungsgemäßen Antriebssystems für ein Hybridfahrzeug;
- Figur 2 ein Diagramm, bei dem die Fahrzeuggeschwindigkeit sowie die Drehzahlen des Verbrennungsmotors und der Schwungmassen-Antriebseinheit über der Zeit aufgetragen sind; und
- Figur 3 ein weiteres Diagramm, bei dem die Fahrzeuggeschwindigkeit sowie die Drehzahlen des Verbrennungsmotors und der Schwungmassen-Antriebseinheit über der Zeit aufgetragen sind.

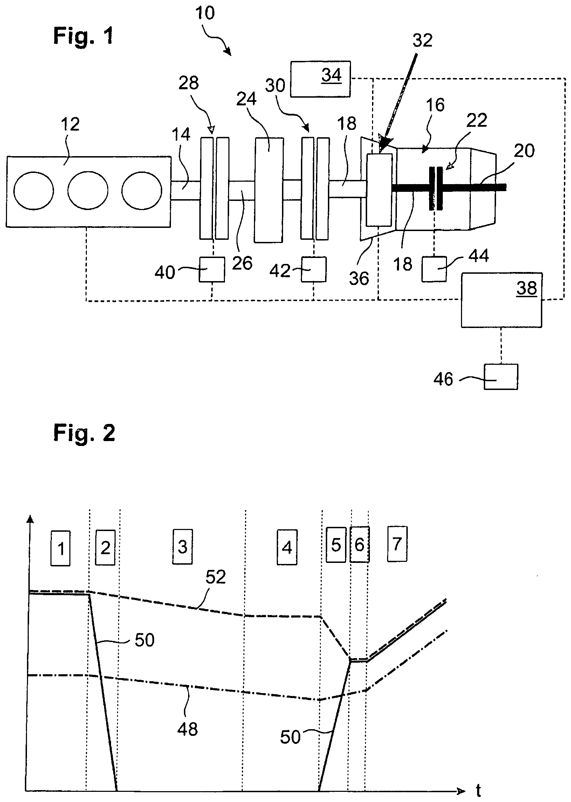

Die Figur 1 zeigt ein Antriebssystem 10 für ein Hybridfahrzeug, mit einem Verbrennungsmotor 12, der eine Verbrennungsmotorwelle 14 aufweist und antreiben kann, einem Automatikgetriebe 16, das antriebsseitig eine koaxial zur Verbrennungsmotorwelle 14 angeordnete Getriebe-Eingangswelle 18 und abtriebsseitig eine koaxial zur Verbrennungsmotorwelle 14 angeordnete Getriebe-Ausgangswelle 20 aufweist, sowie einer Getriebekupplung 22 zum Koppeln oder Entkoppeln der Getriebe-Eingangswelle 18 und der Getriebe-Ausgangswelle 20. Ferner umfasst das Antriebssystem 10 eine Schwungmassen-Antriebseinheit 24, die axial zwischen dem Verbrennungsmotor 12 und dem Automatikgetriebe 16 angeordnet ist und auf einer koaxial zur Verbrennungsmotorwelle 14 angeordneten Zwischenwelle 26 sitzt, eine erste Kupplung 28 zum Koppeln oder Entkoppeln der Verbrennungsmotorwelle 14 und der Zwischenwelle 26, eine zweite Kupplung 30 zum Koppeln oder Entkoppeln der Zwischenwelle 26 und der Getriebe-Eingangswelle 18 sowie eine Elektromaschine 32, die auf der Getriebe-Eingangswelle 18 sitzt und diese in einem Motorbetrieb der Elektromaschine 32 antreiben kann.

Die Schwungmassen-Antriebseinheit 24 ist als Zweimassenschwungrad ausgeführt, wobei das Schwungrad einen Energiespeicher bildet. Unabhängig von der konkreten Konstruktion der Schwungmassen-Antriebseinheit 24 ermöglicht deren Schwungmasse zusammen mit der ersten Kupplung 28 einen mechanischen Schleppstart des abgelegten Verbrennungsmotors 12 bei stehendem oder rollendem Fahrzeug. Folglich kann auf eine elektrische Startvorrichtung für den Verbrennungsmotor 12 verzichtet werden.

Gemäß Figur 1 ist ferner ein elektrisches Bordnetz 34 vorgesehen, wobei die Elektromaschine 32 auch als Generator ausgebildet ist und in einem Generatorbetrieb elektrische Energie in das elektrische Bordnetz 34 einspeist.

Im vorliegenden Ausführungsbeispiel ist ausschließlich ein Niedervolt-Bordnetz 34 mit weniger als 60 V Betriebsspannung vorgesehen. Dementsprechend ist auch die Elektromaschine 32 eine Niedervolt-Elektromaschine, insbesondere eine 48-V-Elektromaschine. Durch die Ausbildung als Niedervolt-Bordnetz 34 mit einer Niedervolt-Elektromaschine 32 lassen sich die Kosten des Antriebssystems 10 reduzieren, da aufgrund der niedrigeren elektrischen Spannung im System das Gefährdungsrisiko geringer und die Absicherung des Bordnetzes 34 somit einfacher und kostengünstiger bereitzustellen ist.

Die Verwendung einer 48-V-Elektromaschine 32 bietet gegenüber herkömmlichen 12-V-Elektromaschinen den Vorteil einer erhöhten Leistungsfähigkeit. Dies macht sich insbesondere bemerkbar, wenn die Elektromaschine 32 in ihrem Motorbetrieb zum Beschleunigen des Hybridfahrzeugs eingesetzt wird, aber auch bei der Rekuperation, wenn die Elektromaschine 32 in ihrem Generatorbetrieb elektrische Energie erzeugt und in das elektrische Bordnetz 34 einspeist.

Die Elektromaschine 32 ist gemäß Figur 1 in das Automatikgetriebe 16 des Antriebssystems 10 integriert. Insbesondere ist angedeutet, dass das Automatikgetriebe 16 antriebsseitig eine Kupplungsglocke 36 aufweist, wobei die Elektromaschine 32 in der Kupplungsglocke 36 aufgenommen ist und dort einen üblicherweise vorgesehenen Drehmomentwandler ersetzt.

Gemäß Figur 1 ist ferner eine elektrische Steuereinheit 38 zur Steuerung des Verbrennungsmotors 12, der Elektromaschine 32 und des als Automatikgetriebe 16 ausgebildeten Hybridfahrzeuggetriebes vorgesehen. Die elektrische Steuereinheit 38 ist ferner mit einem Aktuator 40 zur Betätigung der ersten Kupplung 28, einem Aktuator 42 zur Betätigung der zweiten Kupplung 30 sowie einem Aktuator 44 zur Betätigung der Getriebekupplung 22 verbunden. Ferner ist in Figur 1 ein Fahrpedal 46 angedeutet, durch dessen Betätigung der Fahrer des Hybridfahrzeugs einen aktiven Beschleunigungswunsch anzeigt, wobei die elektrische Steuereinheit 38 eine Betätigung des Fahrpedals 46 erfassen kann.

Die elektrische Steuereinheit 38 ist sowohl mit der Elektromaschine 32 als auch mit dem elektrischen Bordnetz 34 verbunden und kann die Elektromaschine 32 zum Beispiel vom Motorbetrieb in den Generatorbetrieb schalten, oder umgekehrt.

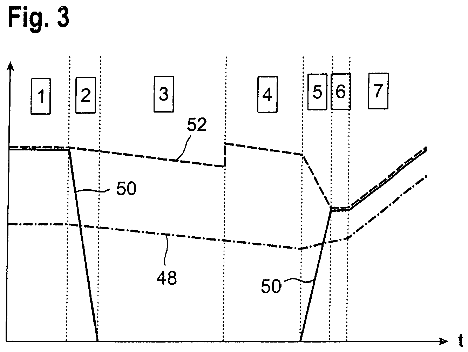

Im Folgenden wird anhand der Figuren 2 und 3 auf Verfahrensvarianten zum Betreiben des oben beschriebenen Antriebssystems 10 für ein Hybridfahrzeug eingegangen.

Die Figuren 2 und 3 zeigen jeweils ein Diagramm, bei dem eine Fahrzeuggeschwindigkeit 48, eine Drehzahl 50 des Verbrennungsmotors 12 und eine Drehzahl 52 der Schwungmassen-Antriebseinheit 24 über der Zeit t aufgetragen sind, wobei die Diagramme jeweils in Zeitintervalle 1 bis 7 unterteilt sind.

Gemäß Figur 2 ist im Zeitintervall 1 ein Betriebszustand des Antriebssystems 10 dargestellt, bei dem das Hybridfahrzeug vom Verbrennungsmotor 12 angetrieben wird und dementsprechend sowohl die Getriebekupplung 22 als auch die erste Kupplung 28 und die zweite Kupplung 30 geschlossen sind. In der dargestellten Ausführungsvariante werden im Zeitintervall 1 durch den Antrieb des Verbrennungsmotors 12 lediglich Reibungseffekte kompensiert, sodass die Fahrzeuggeschwindigkeit 48 im Wesentlichen konstant bleibt. Entsprechend weisen die Drehzahlen 50, 52 des Verbrennungsmotors 12 sowie der Schwungmassen-Antriebseinheit 24 in diesem Zeitintervall 1 ebenfalls einen konstanten Verlauf auf und sind infolge der geschlossenen ersten Kupplung 28 insbesondere identisch.

Sobald die elektrische Steuereinheit 38 erkennt, dass die Voraussetzungen für einen Wechsel in einen energiesparenden Betriebsmodus gegeben sind, wird in einem ersten Verfahrensschritt a) die erste Kupplung 28 geöffnet und der Verbrennungsmotor 12 abgeschaltet. Für diesen auch als "Motor-aus-Segeln" bezeichneten Betriebszustand muss das Fahrpedal 46 unbetätigt sein. Ferner liegt die Fahrzeuggeschwindigkeit 48 bevorzugt oberhalb eines vorgegebenen Geschwindigkeitsschwellwerts, der idealerweise so gewählt ist, dass die daraus resultierende Drehzahl der Schwungmassen-Antriebseinheit 24 bzw. die in der Schwungmassen-Antriebseinheit 24 gespeicherte Energie ausreicht, um den Verbrennungsmotor 12 zu starten.

Abgesehen von den obengenannten Voraussetzungen kann die elektrische Steuereinheit 38 noch weitere Signale empfangen, welche ein Umschalten in den Betriebszustand des "Motor-aus-Segelns" verhindern. Derartige Signale können beispielsweise durch eine zu geringe Kühlmitteltemperatur im Motorkühlkreislauf, einen niedrigen Batterieladestand, eine zu große Längsneigung der Fahrbahn oder eine aktivierte Sonderausstattung wie das Fahren im Sportmodus generiert werden.

Sind jedoch alle Voraussetzungen für den energiesparenden Betriebsmodus erfüllt, wird der Verbrennungsmotor 12 abgelegt, das heißt ausgeschaltet und über das Öffnen der ersten Kupplung 28 vom Antriebsstrang getrennt. Die Drehzahl 50 des Verbrennungsmotors 12 sinkt dementsprechend im Zeitintervall 2 rasch auf Null.

Im Zeitintervall 3 sind die Getriebekupplung 22 und die zweite Kupplung 30 geschlossen, sodass das Hybridfahrzeug weitgehend frei rollt und lediglich durch Reibungsverluste gebremst wird.

Damit die Drehzahl 52 der Schwungmassen-Antriebseinheit 24 nicht unter eine vorgegebene Mindestdrehzahl absinkt, kann die Schwungmassen-Antriebseinheit 24 im Zeitintervall 4 von der Elektromaschine 32 angetrieben werden. Die Getriebekupplung 22 wird hierzu geöffnet und die Elektromaschine 32 in den Motorbetrieb geschaltet. Das Hybridfahrzeug rollt dabei weiterhin im Wesentlichen frei, wobei Reibungsverluste nach wie vor zu einem Absinken der Fahrzeuggeschwindigkeit 48 führen.

Die Elektromaschine 32 treibt hingegen aktiv die Schwungmasse der Schwungmassen-Antriebseinheit 24 an und sorgt zumindest für eine Energieerhaltung in der Schwungmassen-Antriebseinheit 24. Mit anderen Worten hält die Elektromaschine 32 die Schwungmasse der Schwungmassen-Antriebseinheit 24 oberhalb der Mindestdrehzahl, die für einen mechanischen Schleppstart des abgelegten Verbrennungsmotors 12 ausreicht.

Am Ende des Zeitintervalls 4 wird der elektrischen Steuereinheit 38 in einem Verfahrensschritt b) ein Signal zur aktiven Fahrzeugbeschleunigung übermittelt, beispielsweise indem der Fahrer das Fahrpedal 46 betätigt.

Daraufhin wird gemäß einem Verfahrensschritt c) die zweite Kupplung 30 durch die elektrische Steuereinheit 38 geöffnet, sodass die Elektromaschine 32 und die Schwungmassen-Antriebseinheit 24 entkoppelt sind.

Anschließend wird in einem Verfahrensschritt d) die erste Kupplung 28 geschlossen. Gleichzeitig wird auch die Getriebekupplung 22 geschlossen (oder geschlossen gehalten), sodass die Elektromaschine 32 mit der Getriebe-Ausgangswelle 20 drehfest verbunden ist.

Durch das Schließen der ersten Kupplung 28 gleichen sich die Drehzahl 50 des Verbrennungsmotors 12 und die Drehzahl 52 der Schwungmassen-Antriebseinheit 24 im Zeitintervall 5 rasch an, wobei der Verbrennungsmotor 12 von der Schwungmassen-Antriebseinheit 24 durch einen mechanischen Schleppstart gestartet wird.

Ferner wird die Getriebe-Ausgangswelle 20 nach dem Schließen der Getriebekupplung 22 im Verfahrensschritt d) durch die Elektromaschine 32 angetrieben. Folglich kommt es im Zeitintervall 5 bereits unmittelbar nach der Betätigung des Fahrpedals 46 durch den Fahrer zu einer von der Elektromaschine 32 erzeugten Fahrzeugbeschleunigung. Dies wird anhand der bereits im Zeitintervall 5 der Figur 2 steigenden Fahrzeuggeschwindigkeit 48 deutlich.

Nach dem Start des Verbrennungsmotors 12 im Verfahrensschritt d) wird die zweite Kupplung 30 in einem nachfolgenden Verfahrensschritt e) wieder geschlossen (Zeitintervall 6), wobei die Elektromaschine 32 weiterhin für eine Fahrzeugbeschleunigung sorgt.

Der zugestartete und befeuerte Verbrennungsmotor 12 ist zu Beginn des Zeitintervalls 7 über die geschlossene erste Kupplung 28, die geschlossene zweite Kupplung 30 und die geschlossene Getriebekupplung 22 mit der Getriebe-Ausgangswelle 20 drehfest verbunden und kann das Hybridfahrzeug in gewünschter Weise beschleunigen. Dadurch steigen im Zeitintervall 7 sowohl die Fahrzeuggeschwindigkeit 48 als auch die Drehzahlen 50, 52 des Verbrennungsmotors 12 sowie der Schwungmassen-Antriebseinheit 24.

Aufgrund der begrenzten Leistung der Elektromaschine 32 ist die Fahrzeugbeschleunigung in den Zeitintervallen 5 und 6 geringer als die im Zeitintervall 7 durch den Verbrennungsmotor 12 bereitgestellte Fahrzeugbeschleunigung. Dennoch erhält der Fahrer bereits in den Zeitintervallen 5 und 6, also unmittelbar nach seiner Betätigung des Fahrpedals 46 die gewünschte Fahrzeugrückmeldung in Form einer spürbaren Fahrzeugbeschleunigung. Das Antriebssystem 10 reagiert somit weniger träge und sorgt beim Fahrer für ein besseres Fahrgefühl.

Die Figur 3 veranschaulicht analog zu Figur 2 eine Verfahrensvariante zum Betreiben des oben beschriebenen Antriebssystems 10 für ein Hybridfahrzeug.

Die in Figur 3 dargestellte Verfahrensvariante unterscheidet sich von der Verfahrensvariante gemäß Figur 2 lediglich dadurch, dass vor dem Signal zur aktiven Fahrzeugbeschleunigung im Verfahrensschritt b) die Getriebekupplung 22 geschlossen (oder geschlossen gehalten) und die Elektromaschine 32 in einen Generatorbetrieb geschaltet wird. Mit anderen Worten erfolgt in den Zeitintervallen 3 und 4 eine Rekuperation, das heißt eine Umsetzung der kinetischen Fahrzeugenergie in elektrische Energie durch die im Generatorbetrieb befindliche Elektromaschine 32.

Durch den Widerstand der Elektromaschine 32 im Generatorbetrieb entsteht eine größere Fahrzeugverzögerung, sodass die Fahrzeuggeschwindigkeit 48 in den Zeitintervallen 3 und 4 gemäß Figur 3 stärker abnimmt als die Fahrzeuggeschwindigkeit 48 in den Zeitintervallen 3 und 4 gemäß Figur 2.

Da sich die Elektromaschine 32 im Zeitintervall 4 gemäß Figur 3 im Generatorbetrieb befindet, kann sie die Schwungmassen-Antriebseinheit 24 nicht antreiben.

Das Absinken der Drehzahl 52 der Schwungmassen-Antriebseinheit 24 unter die vorgegebene Mindestdrehzahl wird in diesem Fall durch eine Getriebeschaltstrategie des Automatikgetriebes 16 verhindert. Wird die Mindestdrehzahl der Schwungmassen-Antriebseinheit 24 erreicht, so wird durch Zurückschalten des Automatikgetriebes 16 in einen niedrigeren Gang die Drehzahl der Getriebe-Eingangswelle 18 sowie über die geschlossene zweite Kupplung 30 auch die Drehzahl der Zwischenwelle 26 und damit die Drehzahl 52 der Schwungmassen-Antriebseinheit 24 sprunghaft erhöht (siehe Figur 3 im Übergangsbereich der Zeitintervalle 3 und 4). Dadurch wird sichergestellt, dass die Drehzahl 52 bzw. die in der Schwungmassen-Antriebseinheit 24 gespeicherte Energie ausreicht, um einen mechanischen Schleppstart des Verbrennungsmotors 12 durchzuführen.

## Patentansprüche

1. Antriebssystem für ein Hybridfahrzeug, mit
einem Verbrennungsmotor (12), der eine Verbrennungsmotorwelle (14) aufweist und antreiben kann,
einem Automatikgetriebe (16), das antriebsseitig eine koaxial zur Verbrennungsmotorwelle (14) angeordnete Getriebe-Eingangswelle (18) und abtriebsseitig eine koaxial zur Verbrennungsmotorwelle (14) angeordnete Getriebe-Ausgangswelle (20) aufweist,
einer Getriebekupplung (22) zum Koppeln oder Entkoppeln der Getriebe-Eingangswelle (18) und der Getriebe-Ausgangswelle (20),
einer Schwungmassen-Antriebseinheit (24), die axial zwischen dem Verbrennungsmotor (12) und dem Automatikgetriebe (16) angeordnet ist sowie eine koaxial zur Verbrennungsmotorwelle (14) angeordnete Zwischenwelle (26) aufweist,
einer ersten Kupplung (28) zum Koppeln oder Entkoppeln der Verbrennungsmotorwelle (14) und der Zwischenwelle (26),
einer zweiten Kupplung (30) zum Koppeln oder Entkoppeln der Zwischenwelle (26) und der Getriebe-Eingangswelle (18) sowie
einer Elektromaschine (32), die auf der Getriebe-Eingangswelle (18) sitzt und diese in einem Motorbetrieb antreiben kann,
**dadurch gekennzeichnet, dass**
die Schwungmassen-Antriebseinheit (24) als Zweimassenschwungrad ausgeführt ist und
die Elektromaschine (32) eine Niedervolt-Elektromaschine mit einer Betriebsspannung von weniger als 60 V ist.

2. Antriebssystem nach Anspruch 1, **dadurch gekennzeichnet, dass** die Elektromaschine (32) in das Automatikgetriebe (16) integriert ist.

3. Antriebssystem nach einem der vorhergehenden Ansprüche, **dadurch gekennzeichnet, dass** das Automatikgetriebe (16) antriebsseitig eine Kupplungsglocke (36) aufweist, wobei die Elektromaschine (32) in der Kupplungsglocke (36) aufgenommen ist.

4. Antriebssystem nach einem der vorhergehenden Ansprüche, **dadurch gekennzeichnet, dass** ein elektrisches Bordnetz (34) vorgesehen ist, wobei die Elektromaschine (32) auch als Generator ausgebildet ist und in einem Generatorbetrieb elektrische Energie in das elektrische Bordnetz (34) einspeist.

5. Verfahren zum Betreiben eines Antriebssystems (10) gemäß einem der vorhergehenden Ansprüche, welches eine elektrische Steuereinheit (38) aufweist, wobei das Verfahren folgende Schritte umfasst:
a) In einem Betriebszustand des Antriebssystems (10) wird die erste Kupplung (28) geöffnet und der Verbrennungsmotor (12) abgeschaltet;
b) der elektrischen Steuereinheit (38) wird ein Signal zur aktiven Fahrzeugbeschleunigung übermittelt;
c) daraufhin wird die zweite Kupplung (30) durch die elektrische Steuereinheit (38) geöffnet;
d) anschließend werden die erste Kupplung (28) und die Getriebekupplung (22) geschlossen.

6. Verfahren nach Anspruch 5, **dadurch gekennzeichnet, dass** der Verbrennungsmotor (12) nach dem Schließen der ersten Kupplung (28) im Schritt d) durch die Schwungmassen-Antriebseinheit (24) gestartet wird.

7. Verfahren nach Anspruch 5 oder 6, **dadurch gekennzeichnet, dass** die Getriebe-Ausgangswelle (20) nach dem Schließen der Getriebekupplung (22) im Schritt d) durch die Elektromaschine (32) angetrieben wird.

8. Verfahren nach einem der Ansprüche 5 bis 7, **dadurch gekennzeichnet, dass** nach einem Start des Verbrennungsmotors (12) im Schritt d) die zweite Kupplung (30) in einem nachfolgenden Verfahrensschritt e) wieder geschlossen wird.

9. Verfahren nach einem der Ansprüche 5 bis 8, **dadurch gekennzeichnet, dass** die Getriebekupplung (22) vor Schritt b) geschlossen und die Elektromaschine (32) in einen Generatorbetrieb geschaltet wird.

## Claims

1. A drive system for a hybrid vehicle, comprising
an internal combustion engine (12) which has and can drive an internal combustion engine shaft (14),
an automatic transmission (16) which has a transmission input shaft (18) arranged coaxially to the internal combustion engine shaft (14) on the drive side, and a transmission output shaft (20) arranged coaxially to the internal combustion engine shaft (14) on the output side,
a transmission clutch (22) for coupling or decoupling the transmission input shaft (18) and the transmission output shaft (20),
a gyrating mass drive unit (24) which is arranged axially between the internal combustion engine (12) and the automatic transmission (16) and has an intermediate shaft (26) arranged coaxially to the internal combustion engine shaft (14),
a first clutch (28) for coupling or decoupling the internal combustion engine shaft (14) and the intermediate shaft (26),
a second clutch (30) for coupling or decoupling the intermediate shaft (26) and the transmission input shaft (18), and
an electric machine (32) which sits on the transmission input shaft (18) and can drive the latter in a motor mode,
**characterized in that**
the gyrating mass drive unit (24) is configured as a dual-mass flywheel, and
the electric machine (32) is a low-voltage electric machine having an operating voltage of less than 60 V.

2. The drive system according to claim 1, **characterized in that** the electric machine (32) is integrated into the automatic transmission (16).

3. The drive system according to any of the preceding claims, **characterized in that** the automatic transmission (16) has a clutch bell (36) on the drive side, the electric machine (32) being received in the clutch bell (36).

4. The drive system according to any of the preceding claims, **characterized in that** a vehicle electric system (34) is provided, the electric machine (32) being also configured as a generator and feeding electric energy into the vehicle electric system (34) in a generator mode.

5. A method of operating a drive system (10) according to any of the preceding claims which has an electric control unit (38), the method comprising the following steps:
a) in an operating state of the drive system (10), the first clutch (28) is opened and the internal combustion engine (12) is turned off;
b) a signal for an active vehicle acceleration is transmitted to the electric control unit (38);
c) the second clutch (30) is then opened by the electric control unit (38);
d) the first clutch (28) and the transmission clutch (22) are then closed.

6. The method according to claim 5, **characterized in that** the internal combustion engine (12) is started by the gyrating mass drive unit (24) after the closing of the first clutch (28) in step d).

7. The method according to claim 5 or 6, **characterized in that** the transmission output shaft (20) is driven by the electric machine (32) after the closing of the transmission clutch (22) in step d).

8. The method according to any of claims 5 to 7, **characterized in that** after a start of the internal combustion engine (12) in step d), the second clutch (30) is closed again in a subsequent process step e).

9. The method according to any of claims 5 to 8, **characterized in that** the transmission clutch (22) is closed before step b) and the electric machine (32) is switched into a generator mode.

## Revendications

1. Système d'entraînement pour un véhicule hybride, comportant
un moteur thermique (12) qui présente et est apte à entraîner un arbre de moteur thermique (14),
une boîte de vitesses automatique (16) qui présente un arbre d'entrée (18) de la boîte de vitesses qui est agencé de manière coaxiale à l'arbre de moteur thermique (14) côté entraînement, et un arbre de sortie (20) de la boîte de vitesses qui est agencé de manière coaxiale à l'arbre de moteur thermique (14) côté sortie,
un embrayage de boîte de vitesses (22) pour coupler ou découpler l'arbre d'entrée (18) de la boîte de vitesses et l'arbre de sortie (20) de la boîte de vitesses,
une unité d'entraînement (24) de masse d'inertie qui est agencée axialement entre le moteur thermique (12) et la boîte de vitesses automatique (16) et présente un arbre intermédiaire (26) qui est agencé de manière coaxiale à l'arbre de moteur thermique (14),
un premier embrayage (28) pour coupler ou découpler l'arbre de moteur thermique (14) et l'arbre intermédiaire (26),
un deuxième embrayage (30) pour coupler ou découpler l'arbre intermédiaire (26) et l'arbre d'entrée (18) de la boîte de vitesses, et
une machine électrique (32) qui est placée sur l'arbre d'entrée (18) de la boîte de vitesses et qui est apte à l'entraîner dans un mode moteur,
**caractérisé en ce que**
l'unité d'entraînement (24) de masse d'inertie est réalisée sous forme de volant d'inertie à deux masses, et
**en ce que** la machine électrique (32) est une machine électrique à basse tension présentant une tension de fonctionnement inférieure à 60 V.

2. Système d'entraînement selon la revendication 1, **caractérisé en ce que** la machine électrique (32) est intégrée dans la boîte de vitesses automatique (16).

3. Système d'entraînement selon l'une des revendications précédentes, **caractérisé en ce que** la boîte de vitesses automatique (16) présente côté entraînement une cloche d'embrayage (36), la machine électrique (32) étant reçue dans la cloche d'embrayage (36).

4. Système d'entraînement selon l'une des revendications précédentes, **caractérisé en ce qu'**il est prévu un réseau de bord électrique (34), la machine électrique (32) étant également réalisée sous forme de générateur et alimentant le réseau de bord électrique (34) en énergie électrique dans un mode générateur.

5. Procédé de mise en oeuvre d'un système d'entraînement (10) selon l'une des revendications précédentes présentant une unité de commande électrique (38), le procédé comprenant les étapes suivantes :
a) Dans un état de fonctionnement du système d'entraînement (10), le premier embrayage (28) est ouvert et le moteur thermique (12) est arrêté ;
b) un signal d'accélération de véhicule active est transmis à l'unité de commande électrique (38) ;
c) le deuxième embrayage (30) est alors ouvert par l'unité de commande électrique (38) ;
d) le premier embrayage (28) et l'embrayage de boîte de vitesses (22) sont ensuite fermés.

6. Procédé selon la revendication 5, **caractérisé en ce que** le moteur thermique (12) est démarré par l'unité d'entraînement (24) de masse d'inertie après la fermeture du premier embrayage (28) à l'étape d).

7. Procédé selon la revendication 5 ou 6, **caractérisé en ce que** l'arbre de sortie (20) de la boîte de vitesses est entraîné par la machine électrique (32) après la fermeture de l'embrayage de boîte de vitesses (22) à l'étape d).

8. Procédé selon l'une des revendications 5 à 7, **caractérisé en ce que** suite à un démarrage du moteur thermique (12) à l'étape d), le deuxième embrayage (30) est de nouveau fermé dans une étape de procédé e) suivante.

9. Procédé selon l'une des revendications 5 à 8, **caractérisé en ce que** l'embrayage de boîte de vitesses (22) est fermé avant l'étape b) et la machine électrique (32) est commutée dans un mode générateur.
